# EUROPEAN PATENT SPECIFICATION

(11) **EP 1 797 653 B1**
(45) Date of publication and mention of the grant of the patent: **05.05.2010**
(21) Application number: 05797372.9
(22) Date of filing: 16.09.2005
(51) Int. Cl.: H04B 10/10

(54) **TRANSMITTING DEVICE FOR FREE-SPACE OPTICAL TRANSMISSION**
SENDEEINRICHTUNG FÜR DIE OPTISCHE FREIRAUM-ÜBERTRAGUNG
DISPOSITIF D'EMISSION POUR LA TRANSMISSION OPTIQUE EN ESPACE LIBRE

(30) Priority: 20.09.2004 FR 0409939
(43) Date of publication of application: 20.06.2007
(73) Proprietor: ZXTALK ASSETS, LLC, Wilmington DE 19808 (US)
(72) Inventor: BROYDE, Frederic, F-78580 Maule (FR); CLAVELIER, Evelyne, F-78580 Maule (FR)
(74) Representative: Heselberger, Johannes
(86) International application number: PCT/IB2005/003309
(87) International publication number: WO 2006/033018

(56) References cited:
- WO-A-2004/038962
- US-A- 5 471 119
- US-A1- 2004 101 312
- PATENT ABSTRACTS OF JAPAN vol. 1999, no. 10, 31 August 1999 (1999-08-31) & JP 11 127170 A (HORIBA LTD), 11 May 1999 (1999-05-11)

## Description

### FIELD OF THE INVENTION

The invention relates to a transmitting device for transmission through space, using electromagnetic waves of the infrared and/or visible and/or ultraviolet bands produced by one or several discharge lamps.

The French patent application number 0409939 of 20 September 2004, entitled "Dispositif d'émission pour la transmission optique en espace libre" is referred to.

### PRIOR ART

In the following, the word "light" will designate an electromagnetic radiation which may comprise visible light and/or infrared light and/or ultraviolet light. In the following, the wording "discharge lamp" will designate a discharge lamp of any type. This lamp may for instance be a low-pressure discharge lamp, for instance a mercury vapour fluorescent tube, or a compact fluorescent lamp, or a sodium vapour lamp, etc. This lamp may for instance be a high-pressure discharge lamp, for instance a metal iodide lamp.

The idea of using discharge lamps for optical transmission has already been disclosed in several patent applications, among which:
- the application of Martin R. Dachs entitled *Optical communication system* corresponding to the patent number 3,900,404 of the United States of America, of 1975 ;
- the application of Shinichi Nakada corresponding to the Japanese patent number JP60032443, published in 1985 ;
- the PCT application of Lars Bergkvist entitled *A method in the operation of a drive device for electric discharge lamps and a drive device* (PCT document number WO9012479), published in 1990 ;
- the PCT application of Trevor T. Gray, entitled *Data transmission system*, (PCT document number WO9013067), published in 1990 ;
- the PCT application of Michael Smith, entitled *Modulation and coding for transmission using fluorescent tubes* corresponding to the patent number 5,657,145 of the United States of America, of 1997.

The possibility of modulating the light produced by a discharge lamp at a frequency greater than 20 kHz has also been established in several technical communications, among which:
- the article of R.C. Perkins and W.M. Honig entitled "A High-Intensity Pulsed Light Source in Blue and UV from Commercial Fluorescent Tubes" published in IEEE Pho tonic Technology Letters, Vol. 3, No. 1, January 1991, pages 91 to 92;
- the article ofD.K. Jackson et al. entitled "Fiat Lux: A Fluorescent Lamp Digital Transceiver", published in IEEE Transactions on Industry Applications, Vol. 34, No. 3, May/June 1998, pages 625 to 630.

A further prior art system is known from US 2004/0101312.

The person skilled in the art knows that the light produced by a discharge lamp may be modulated in many ways, and that it may therefore indeed be used for transmissions. In general, it is necessary to deliver a suitably modulated "lamp current" to the different discharge lamps, this "lamp current" being produced by a "control device". According to a first example, the lamp current may be a current flowing always in the same direction, made up of a direct current on which a modulation is superimposed. The above-mentioned application of Martin R. Dachs relates to a device of this type, though this approach is difficult to implement because firstly the electrical characteristics of discharge lamps are such that a control device according to this approach is complex (or has a low efficiency), and secondly discharge lamps are generally not designed to be submitted to a current having a d.c. component. According to a second example, the lamp current may be a current at the frequency of an a.c. energy distribution system (for instance 50 Hz or 60 Hz), suitably modulated, this approach being compatible with the use of a classical electromagnetic ballast, comprising an inductor in series with the discharge lamp. The above-mentioned applications of Michael Smith and of Trevor T. Gray relate to devices of this type. According to a third example, the lamp current may be a high frequency current (for instance at a frequency higher than 20 kHz to avoid audible noise) produced by an inverter, as in an electronic ballast, but modulated in a suitable way. The above-mentioned applications of Shinichi Nakada and of Lars Bergkvist relate to this type of method.

The person skilled in the art knows that the use of a high frequency current provides the longer discharge lamp life, and a better luminous efficacy. However, one should not forget that experience shows that the possibilities and performances of the modulation of the produced luminous flux depend on the type of discharge lamp and on several other parameters, such as the frequency band used for the modulation.

In particular, when the lamp current is a high frequency current or when the modulation comprises high frequency components, the person skilled in the art understands that it is desirable that the wiring between the control device and the discharge lamp(s) be as short as possible. The advantages of keeping this wiring short relate, for instance, to electromagnetic compatibility, electrical safety, or the efficiency of the whole installation. In practice, a short wiring between the control device and the discharge lamp(s) implies that each luminaire containing one or several lamp(s) comprises its own control device, which implies, according to the state of the art, that two distinct wirings be used, one for delivering the power supply to each luminaire, using for instance a connection to an a.c. energy distribution system, and the other for delivering the signals to be transmitted by each luminaire.

According to the prior art, the question of the means for delivering the signals to be transmitted to the lamp is not addressed in a manner satisfactory for all applications, since the use of two separate wirings is obviously more expensive than a classical wiring for luminaires only intended for lighting. In order to use only one wiring, one could plan to deliver the signals to be transmitted to each luminaire using a radio link, but this solution cancels the main advantage of free-space optical transmission, which is that it does note use the radio spectrum.

### DESCRIPTION OF THE INVENTION

The purpose of the invention is a transmitting device for free-space optical transmission which does not require a separate wiring for delivering its input signals, without the limitations of known methods and devices.

The invention is about a transmitting device for free-space optical transmission, **characterized in that:**
- firstly it comprises one or several discharge lamps used as light source for transmission,
- secondly it comprises a receiving set for transmission via power distribution lines, capable of delivering "demodulated signals" at its output, the "demodulated signals" being obtained from a demodulation of signals appearing at the terminals allowing to power-feed the transmitting device,
- thirdly the "demodulated signals" are applied to the input of a control device which modulates the light produced by said one or several discharge lamps as a function of the "demodulated signals".

The receiving set for transmission via power distribution lines exploits signals appearing at the power-feeding terminals of the transmitting device of the invention. These power distribution lines may belong to any kind of energy distribution system, for instance a d.c. energy distribution system, an a.c. energy distribution system connected to the public low-voltage network, a shipboard power distribution system, etc.

The receiving set for transmission via power distribution lines is the receiving part of a system for transmission via power distribution lines which can also be called "power-line communication" or "PLC" in English. The characteristics and possible implementations of such a system are well known to specialists, several aspects being presented in the article of N. Pavlidou, A.J. Han Vinck, J. Yazdani and B. Honary entitled "Power Line Communication: State of the Art and Future Trends" published in the IEEE Communications Magazine, Vol. 41, No. 4, April 2003, pages 34 to 40. It should be noted that, according to the regulations applicable in the European Union, the frequencies allocated to some transmissions via power distribution lines are higher than 3 kHz. According to the invention, the receiving set for transmission via power distribution lines may therefore obtain the "demodulated signals" from a demodulation of signals of frequencies higher than 3 kHz appearing at the terminals allowing to power-feed the transmitting device.

The signals transmitted by the system for transmission via power distribution lines may be digital signals or analog signals, obtained using any digital or analog modulation method.

The article of E. Biglieri entitled "Coding and Modulation for a Horrible Channel" published in the IEEE Communications Magazine, Vol. 41, No. 5, May 2003, at the pages 92 to 98, teaches us that, for transmission via power distribution lines, the modulation of a single carrier is often not a good technical solution. Consequently, a device of the invention may be **characterized in that** the receiving set for transmission via power distribution lines uses a modulation method using several carriers or a spread spectrum technique. For instance, modulation method using several carriers, such as the orthogonal frequency-domain multiplex (also referred to as OFDM), may give good results.

As is the case for the known devices and methods, it is clear that the light produced by the discharge lamp(s) of a device of the invention may be modulated in many ways: the "lamp current" may for instance be a current flowing always in the same direction, made up of a direct current on which a modulation is superimposed, or for instance be a suitably modulated current at the frequency of an a.c. energy distribution system, or for instance be a high frequency current modulated in a suitable way.

We have said above that it is often advantageous to feed the discharge lamps with a high frequency lamp current. A device of the invention may therefore be **characterized in that** said one or several discharge lamps are fed with an a.c. current of frequency higher than 15 kHz.

A device of the invention may be **characterized in that** the a.c. current is modulated according to a method involving a variation of its phase or of its frequency. The person skilled in the art sees that this modulation method is easy to implement when the discharge lamp(s) are fed with a high frequency current. A particularly simple method implementing a switch-mode control device is for instance presented in the above-mentioned article ofD.K. Jackson *et al.* A device of the invention may also be **characterized in that** the lamp current is an a.c. current modulated according to a method involving a variation of its amplitude. It is clear for the person skilled in the art that this result may for instance be obtained using a variation of the duty cycle of a switch-mode control device.

In general, it is desirable that the modulation of light be imperceptible by human observers. This result may be obtained thanks to the phenomenon of the persistence of vision, which eliminates the perception of flicker for fast enough luminous variations. A device of the invention may therefore be **characterized in that** the variation of the luminous flux corresponding to the modulation of light contains practically no components at frequencies less than 24 Hz. For some modulations, this limit of 24 Hz will be appropriate for having no perception of the presence of a modulation by a human observer. For some modulations, it might be useful to use a higher limit, for instance 200 Hz.

If the modulation of light is not perceptible, it is clear that the light produced by a device of the invention may, if it is visible, have the characteristics required for lighting. Consequently, a device of the invention may be **characterized in that** the light produced is also used for lighting.

We note that, in this case, a device of the invention may be designed in such a way that it looks like an ordinary luminaire. Consequently, a device of the invention may be **characterized in that** its free-space optical transmission function is secret, its apparent function being lighting.

In order to obtain the characteristics required for a given application, a device of the invention may use the most appropriate type of discharge lamp. In particular, a device of the invention may be **characterized in that** said one or several discharge lamps are low-pressure discharge lamps, which may eventually contain fluorescent materials. In particular, a device of the invention may be **characterized in that** said one or several discharge lamps are high-pressure discharge lamps.

### BRIEF DESCRIPTION OF THE DRAWINGS

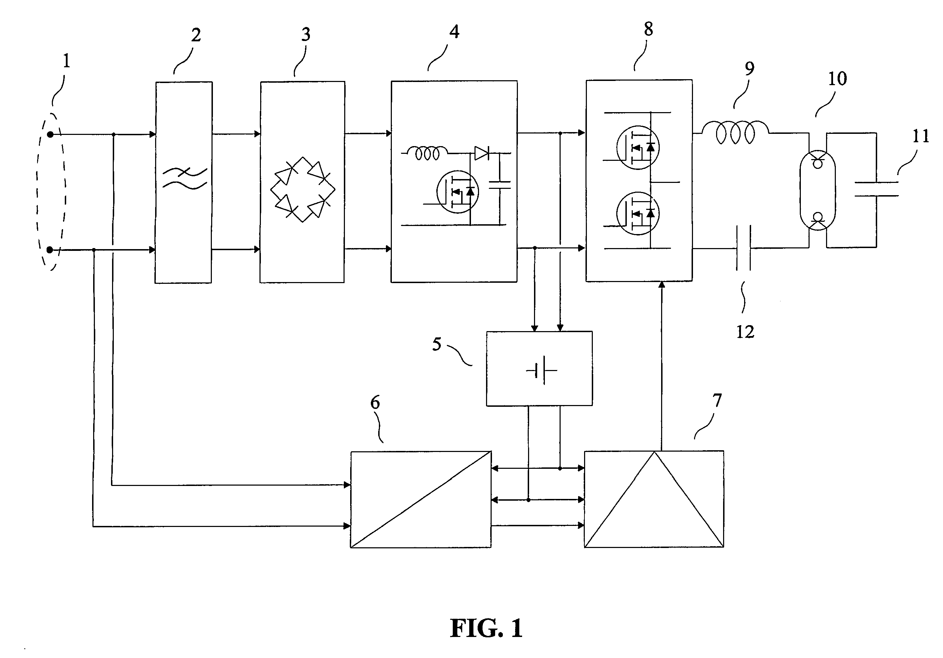

Other advantages and characteristics will appear more clearly from the following description of a particular embodiment of the invention, given by way of non-limiting examples, with reference to the accompanying drawings of Figure 1, which shows an embodiment of the invention.

### DETAILED DESCRIPTION OF AN EMBODIMENT

As an example of a device of the invention, given by way of non-limiting example, we have represented in Fig. 1 a device of the invention connected by its input terminals (1) to an a.c. energy distribution system. A mains filter (2) allows to effectively reduce the conducted electromagnetic disturbances produced at frequencies higher than 150 kHz by the power circuits, in accordance with the regulation concerning electromagnetic compatibility. The power circuits comprise a rectifier (3), a power-factor-correction circuit (4), a low-voltage power supply (5) and an inverter (8). The power-factor-correction circuit (4), well known to specialists, is a non-isolated boost converter. It draws a sinusoidal current from the mains. It therefore provides a low emission of harmonic currents, in accordance with the regulation concerning electromagnetic compatibility. It also provides pre-regulation. The inverter (8) comprises a push-pull switching stage, whose output is connected to a series inductor (9) connected in series with a hot-cathode fluorescent lamp (10) and a capacitor (12), a parallel capacitor (11) allowing an optimal start of the lamp, in line with the structure commonly used in electronic ballasts for fluorescent lamps, for instance presented in the article ofE. Deng and S. Cuk entitled "Single Stage, high power factor, lamp ballast", published in Proceedings of the 1994 IEEE Applied Power Electronics Conference and Exposition, APEC'94, 1994, at the pages 441 to 449. A receiving set for transmission via power distribution lines (6), delivers "demodulated signals" at its output, the "demodulated signals" being obtained from a demodulation of signals of frequencies higher than 3 kHz appearing at the two input terminals (1). These "demodulated signals" are applied to the input of a control circuitry (7) which produces the signal controlling the state of the switches (for instance metal-oxide-semiconductor field effect transistors) of the inverter (8). The control circuitry (7) and the inverter (8) make up a switched-mode control device which modulates the lamp current flowing through the hot-cathode fluorescent lamp (10) as a function of the "demodulated signals", in such a way that the light produced be also modulated as a function of the "demodulated signals". The low-voltage power supply (5) feeds the receiving set for transmission via power distribution lines (6) and the control circuitry (7).

No earthing, grounding, or connection to a protective ground wire at the level of the input terminals (1) appears in Fig. 1. Such connection may obviously be present, for instance for electrical safety and/or for electromagnetic compatibility.

The device according to the example shown in Fig. 1 is built in such a way that it looks like a common luminaire, only intended for lighting. The "demodulated signals" may also be used for functions other than the modulation of light, for instance for functions related to the lighting function, such as on/off switching or the variation of the lighting intensity (dimming function).

In the device according to the example shown in Fig. 1, the inverter (8) produces a frequency-modulated lamp current around the frequency of 62 kHz, which produces a frequency-modulated light around the frequency of 124 kHz. This type of constant-envelope modulation has the advantage of not implying a modulation of light perceptible by human observers. The specialist sees how he may design the control circuitry (7) in order to obtain a frequency modulation without amplitude modulation, in spite of the variation of the impedance of the series inductor (9) and of the capacitor (12): the signals controlling the state of the switches must be frequency-modulated and duty-cycle-modulated. On the other hand, if the frequency band used for the modulating frequency only contains frequencies sufficiently high to be imperceptible thanks to the persistence of vision, an amplitude modulation induced by the frequency modulation may be tolerated, as explained in the above-mentioned article of D.K. Jackson *et al*, and a modulation of the duty cycle will not be necessary.

Thanks to a device of the invention, the signals sent by the transmitter of a system for transmission via power distribution lines are transformed into optical signals which may be received using a suitable receiver for optical transmission. This optical transmission allows a transmission without wire and without radio. The optical signals transmitted in this manner may correspond to voice, data, etc. These optical signals may also comprise other information which originates internally from the device of the invention, for instance relating to the ageing of the lamps, which may be deduced from some electrical quantities of the control device, as is well known to specialists.

A device of the invention may be such that the emission of modulated light for a data set takes place at a well determined time, for instance using a synchronization with respect to the signals transmitted via the energy distribution system. In this way, several devices of the invention may each produce a modulated light, these modulations being identical and in phase. This would increase the signal received by a receiver for optical transmission which would receive the light produced by several of these devices of the invention.

It is also possible that several different devices of the invention connected to the same energy distribution system produce different optical signals, using an addressing scheme well known to specialists.

### INDICATIONS ON INDUSTRIAL APPLICATIONS

The device for free-space optical transmission of the invention is particularly suitable for broadcasting information inside buildings, in a manner totally immune to radio frequency disturbances and electromagnetic interferences of external origin. Many applications are possible, for instance the application to the transmission of data on prices in commercial premises used for mass marketing, concerned by the above-mentioned application of Trevor T. Gray.

The device of the invention may particularly be implemented in emergency transmission systems in buildings, because in the context of an accident of large extent or of a disaster, the capacity of radio transmissions are often saturated or very disturbed. For this application, a device of the invention could also have a safety lighting function.

Since it does not use radio transmission likely to be picked up at a distance, the device of the invention is particularly suitable for secret transmissions, especially when the light it produces cannot reach a receiver for optical transmission, when this light is not intended for this receiver.

## Claims

1. A transmitting device for free-space optical information signal transmission, **characterized in that:**
- firstly it comprises one or several discharge lamps adapted to be used as light source for transmission, of information signals
- secondly it comprises a receiving set for transmission via power distribution lines, capable of delivering demodulated signals at its output, the demodulated signals being obtained from a demodulation of signals appearing at the terminals allowing to power-feed the transmitting device,
- thirdly the demodulated signals are applied to the input of a control device which is adapted to modulate the light produced by said one or several discharge lamps as a function of the demodulated signals.

2. The device of claim 1, **characterized in that** the receiving set for transmission via power distribution lines uses a modulation method using several carriers or a spread spectrum technique.

3. The device of any of the claims 1 or 2, **characterized in that** said one or several discharge lamps are fed with an a.c. current of frequency higher than 15 kHz.

4. The device of claim 3, **characterized in that** the a.c. current is modulated according to a method involving a variation of its phase or of its frequency.

5. The device of claim 3, **characterized in that** the a.c. current is modulated according to a method involving a variation of its amplitude.

6. The device of any of the claims 1 to 5 **characterized in that** the variation of the luminous flux corresponding to the modulation of light contains practically no components at frequencies less than 24 Hz.

7. The device of any of the claims 1 to 6 **characterized in that** the light produced is also used for lighting.

8. The device of claim 7, **characterized in that** its free-space optical transmission function is secret, its apparent function being lighting.

9. The device of any of the claims 1 to 8, **characterized in that** said one or several discharge lamps are low-pressure discharge lamps, which may eventually contain fluorescent materials.

10. The device of any of the claims 1 to 8, **characterized in that** said one or several discharge lamps are high-pressure discharge lamps.

## Patentansprüche

1. Eine Sendeeinrichtung für die optische Freiraumübertragung, **dadurch gekennzeichnet, dass:**
- diese zunächst eine oder mehrere Entladungslampen aufweist, welche so ausgestaltet sind, das sie als Lichtquelle für das Senden von Infonnationssignalen verwendet werden
- diese zweitens ein Empfangsgerät aufweist zum Senden über Energieverteilungsleitungen, welche in der Lage sind, demodulierte Signale zu dessen Ausgang zu liefern, wobei die demodulierten Signale erhalten werden von einer Demodulation von Signalen, die an den Anschlüssen auftreten und eine Energieversorgung der Sendeeinrichtung ermöglichen,
- das drittens die demodulierten Signale in den Eingang eines Steuerungsgeräts eingespeist werden, welches derart ausgestaltet ist, dass es das Licht, welches von einer oder mehreren der Entladungslampen erzeugt wird, als eine Funktion der demodulierten Signale moduliert.

2. Das Gerät gemäß Anspruch 1, **dadurch gekennzeichnet, dass** das Empfangsgerät zum Senden über die Energieverteilungsleitungen ein Modulationsverfahren verwendet, welches verschiedene Träger oder eine Spread-Spektrum-Technik verwendet.

3. Das Gerät gemäß einem der Ansprüche 1 oder 2, **dadurch gekennzeichnet, dass** die eine oder mehreren Entladungslampen mit einem Wechselstrom einer Frequenz von höher als 15 kHz versorgt werden.

4. Das Gerät gemäß Anspruch 3, **dadurch gekennzeichnet, dass** der Wechselstrom moduliert wird in Übereinstimmung mit einem Verfahren, welches eine Variation von dessen Phase oder dessen Frequenz beinhaltet.

5. Das Gerät gemäß Anspruch 3, **dadurch gekennzeichnet, dass** der Wechselstrom moduliert wird in Übereinstimmung mit einem Verfahren, welches eine Variation von dessen Amplitude beinhaltet.

6. Das Gerät gemäß einem der Ansprüche 1 bis 5, **dadurch gekennzeichnet, dass** die Variation des Lichtstroms, welche mit der Modulation von Licht korrespondiert, praktisch keine Komponenten bei Frequenzen von weniger als 24 Hz enthält.

7. Das Gerät gemäß einem der Ansprüche 1 bis 6, **dadurch gekennzeichnet, dass** das hergestellte Licht auch zum Beleuchten verwendet wird.

8. Das Gerät gemäß Anspruch 7, **dadurch gekennzeichnet, dass** seine optische Freiraumübertragungsfunktion geheim ist, wobei seine sichtbare Funktion die Beleuchtung ist.

9. Das Gerät gemäß einem der Ansprüche 1 bis 8, **dadurch gekennzeichnet, dass** die eine oder mehreren Entladungslampen Niederdruckentladungslampen sind, welche gegebenenfalls fluoreszierende Materialien enthalten können.

10. Das Gerät gemäß einem der Ansprüche 1 bis 8, **dadurch gekennzeichnet, dass** die eine oder mehreren Entladungslampen Hochdruckentladungslampen sind.

## Revendications

1. Un dispositif d'émission pour l'émission d'un signal d'information optique en espace libre, **caractérisé en ce que :**
- en premier lieu il comprend une ou plusieurs lampes à décharge aptes à être utilisées en tant que sources lumineuses pour l'émission de signaux d'information,
- en second lieu il comprend un ensemble récepteur pour l'émission via des lignes de distribution d'énergie, capable de délivrer des signaux démodulés sur sa sortie, les signaux démodulés étant obtenus par une démodulation des signaux apparaissant sur les bornes permettant d'alimenter en énergie le dispositif d'émission,
- en troisième lieu les signaux démodulés sont appliqués à l'entrée d'un dispositif de contrôle qui est apte à moduler la lumière produite par lesdites une ou plusieurs lampes à décharge en fonction des signaux démodulés.

2. Le dispositif de la revendication 1, **caractérisé en ce que** l'ensemble récepteur pour l'émission via les lignes de distribution d'énergie utilise une méthode de modulation utilisant plusieurs porteuses ou une technique à étalement de spectre.

3. Le dispositif de l'une des revendications 1 ou 2, **caractérisé en ce que** lesdites une ou plusieurs lampes à décharge sont alimentées par un courant alternatif de fréquence supérieure à 15 kHz.

4. Le dispositif de la revendication 3, **caractérisé en ce que** le courant alternatif est modulé selon un procédé impliquant une variation de sa phase ou de sa fréquence.

5. Le dispositif de la revendication 3, **caractérisé en ce que** le courant alternatif est modulé selon un procédé impliquant une variation de son amplitude.

6. Le dispositif de l'une des revendications 1 à 5, **caractérisé en ce que** la variation du flux lumineux correspondant à la modulation de la lumière ne contient pratiquement aucune composante à des fréquences inférieures à 24 Hz.

7. Le dispositif de l'une des revendications 1 à 6, **caractérisé en ce que** la lumière produite est également utilisée pour l'éclairage.

8. Le dispositif de la revendication 7, **caractérisé en ce que** sa fonction de transmission optique en espace libre est secrète, sa fonction apparente étant l'éclairage.

9. Le dispositif de l'une des revendications 1 à 8, **caractérisé en ce que** lesdites une ou plusieurs lampes à décharge sont des lampes à décharge à basse pression, qui peuvent finalement contenir des matériaux fluorescents.

10. Le dispositif de l'une des revendications 1 à 8, **caractérisé en ce que** lesdites une ou plusieurs lampes à décharge sont des lampes à décharge à haute pression.
